# EUROPÄISCHE PATENTSCHRIFT

(11) **EP 0 462 049 B1**
(45) Veröffentlichungstag und Bekanntmachung des Hinweises auf die Patenterteilung: **14.09.1994**
(21) Anmeldenummer: 91810352.4
(22) Anmeldetag: 07.05.1991
(51) Int. Cl.: B01D 3/00

(54) **Anordnung zum Sammeln und Mischen von Flüssigkeit in einer Gegenstromkolonne**
Apparatus for collecting and mixing liquids in a counter-current column
Dispositif pour amasser et mélanger des liquides dans une colonne à contre-courant

(30) Priorität: 13.06.1990 CH 1975/90
(43) Veröffentlichungstag der Anmeldung: 18.12.1991
(73) Patentinhaber: Sulzer Chemtech AG, CH-8404 Winterthur (CH)
(72) Erfinder: Ghelfi, Lorenzo, CH-8610 Uster (CH); Plüss, Raymond C., CH-8451 Klein-Andelfingen (CH)
(74) Vertreter: Hammer, Bruno, Dr.

(56) Entgegenhaltungen:
- DE-A- 1 501 390

## Beschreibung

Die Erfindung betrifft eine Anordnung zum Sammeln und Mischen von Flüssigkeit über dem Verteilerboden zwischen zwei Abschnitten einer Gegenstromkolonne, welche Anordnung mindestens zwei kanalartige Tröge aufweist, die in ihren Böden mit Durchtrittsöffnungen für die Flüssigkeit versehen sind.

Bisher wird die Flüssigkeit direkt auf dem Verteilboden gesammelt, ohne dass eine Möglichkeit besteht, sie vorher über den Querschnitt zu vermischen. Der Verteilboden vermag jedoch keine ausreichende Durchmischung der Flüssigkeit über den Querschnitt zu gewährleisten, da keine Querströmungen vorhanden sind. Dadurch werden evtl. vorhandene Konzentrationsgradienten konserviert und auf den, unter dem Boden liegenden Kolonnenabschnitt weitergeleitet, was die Wirksamkeit der Kolonne beeinträchtigt.

Aufgabe der Erfindung ist es, eine Vorrichtung zu schaffen, bei dem die Quervermischung der gesammelten Flüssigkeit erreicht wird. Diese Aufgabe wird mit der Erfindung dadurch gelöst, dass über dem Verteilboden die Tröge angeordnet sind, und dass ferner der Boden jedes Troges in einem ersten Teilbereich geschlossen und in einem zweiten Teilbereich mit mindestens einem Bodenauslass versehen ist.

Die asymmetrische Verteilung und die Konzentration der Ausflussöffnungen auf einen Teilbereich eines Trogbodens verursachen automatisch eine Querströmung in dem Trog, durch die die gewünschte Vermischung erreicht wird.

Konstruktiv sehr einfach kann der neue Trog gestaltet werden, wenn der Bodenauslass an eines der Trogenden verlegt und beispielsweise durch Weglassen einer Stirnwand realisiert ist.

Andererseits hat es sich jedoch auch als vorteilhaft erwiesen, wenn der Bodenauslass aus einer Anzahl öffnungen besteht, die höchstens auf 1/2, vorteilhaft nur auf 1/4 seiner Länge verteilt sind; die Oeffnungen können dabei sowohl am Ende als auch in der Mitte eines Troges liegen.

Sammeln und Mischen der Flüssigkeit mit den genannten Trögen lassen sich besonders wirksam gestalten, wenn die "Endauslässe" von auf gleicher Niveauhöhe angeordneten Trögen abwechselnd ineinander diametral entgegengesetzte Richtungen weisen, und/oder wenn zwischen Trögen mit Endauslässen solche mit Bodenauslässen in der Mitte eingesetzt sind; eine weitere Verbesserung erzielt man, wenn mindestens zwei Lagen mit ihren Längsachsen in einem Winkel zueinander stehender Tröge auf unterschiedlichen Niveauhöhen vorgesehen sind.

Im folgenden wird die Erfindung anhand von Ausführungsbeispielen im Zusammenhang mit der Zeichnung näher erläutert.
- Fig. 1: zeigt eine erste Ausführungsform eines kanalartigen Troges;
- Fig. 2: stellt in einem Schnitt senkrecht zur Kolonnenachse einen Ausschnitt aus einem Kolonnenquerschnitt dar und zeigt die Anordnung von Trögen nach Fig. 1 in einer Ebene des Kolonnenquerschnitts, wobei nur einige Tröge gezeigt sind;
- Fig. 3: ist in schematischer Darstellung ein Ausschnitt aus einer Gegenstromkolonne, beispielsweise einer Hochdruck-Destillationskolonne, in die Tröge eingebaut sind;
- Fig. 4: schliesslich ist ein Schnitt IV-IV von Fig. 3.

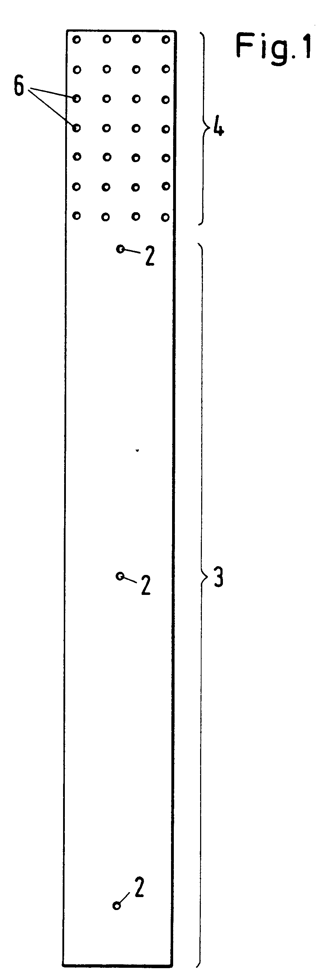

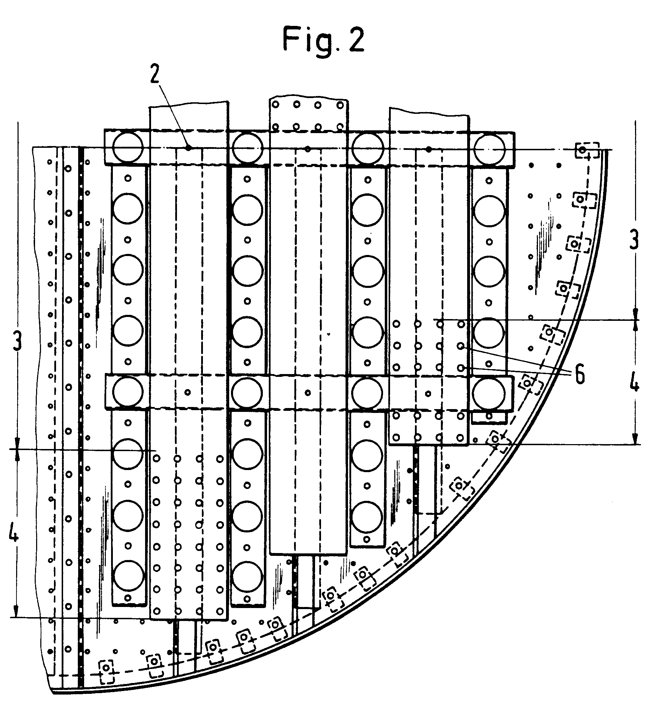

Ein kanalartiger Trog 1 (Fig. 1) weist beispielsweise in seinem Boden Bohrungen 2 für eine Verschraubung mit nicht gezeigten Tragrosten auf. Sein Boden ist unterteilt in einen geschlossenen Teilbereich 3 und in einen, als Bodenauslass 4 dienenden Teilbereich. Der Bodenauslass 4 besteht in Fig. 1 und 2 aus einer Anzahl Oeffnungen 6, die über eine Länge, die höchstens 1/2, vorteilhafterweise 1/4, der Troglänge beträgt, an einem Ende oder in der Mitte (Fig. 2) des Troges 1 konzentriert sind. Selbstverständlich ist es auch möglich, den Bodenauslass 4 in einem anderen Bereich der Troglänge anzuordnen.

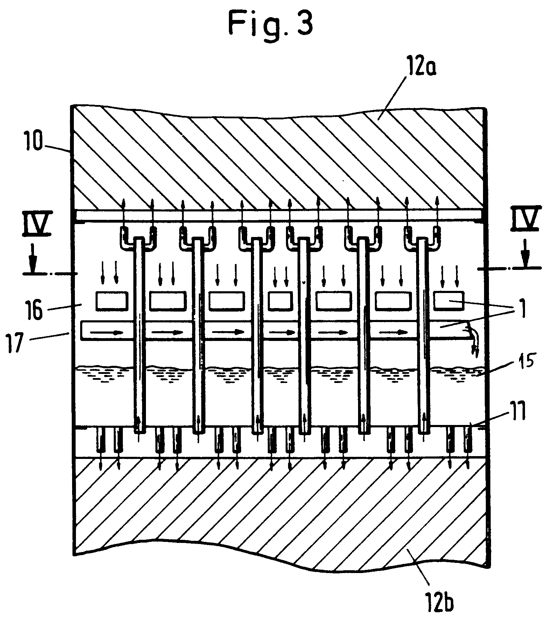

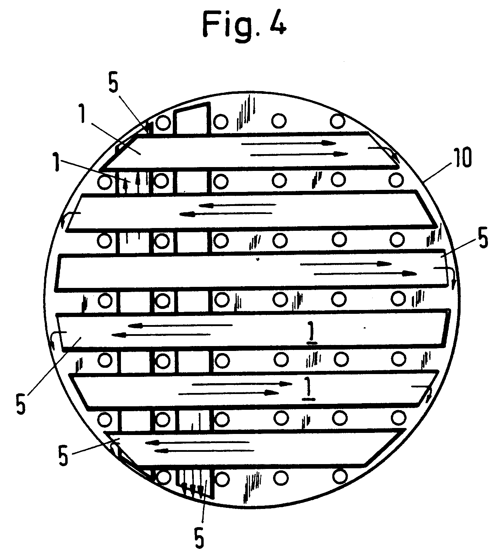

Der Bodenauslass kann jedoch mit Vorteil ans Ende eines Troges 1 verlegt und durch das Fehlen der Stirnwand des Troges 1 realisiert sein, wie dies an den Trögen in den Fig. 3 und 4 gezeigt ist.

Bei dem in Fig. 3 gezeigten Ausschnitt aus einer Hochdruck-Destillationskolonne 10 liegt zwischen Austauschabschnitten 12a, 12b, die beispielsweise Packungskörper enthalten, ein freier Zwischenraum, der nach unten durch einen Verteilerboden 11 begrenzt ist. Im Zwischenraum sind in einem Gas/Flüssigkeits-Verteiler oberhalb des Niveaus der Flüssigkeit 15 sich über den ganzen Kolonnenquerschnitt erstreckende Tröge 1 vorgesehen, die in zwei Lagen 16, 17 übereinander angeordnet sind, wobei die Längsachsen der Tröge 1 der einen Lage 16 senkrecht auf demjenigen bei der zweiten Lage 17 stehen. Prinzipiell sind jedoch auch Anordnungen denkbar, bei denen die Trogachsen zweier Lagen schiefwinklig zueinander angeordnet sind.

Weiterhin sind die Tröge 1 in diesem Beispiel so gestaltet, dass die Flüssigkeit nur aus einem Bodenauslass 5 nahe ihrem einen Ende abfliessen kann. Dadurch wird jeweils die über den ganzen Kolonnenquerschnitt längs einer Troglänge herabrieselnde Flüssigkeit gesammelt und durchmischt, ehe sie in den "See" 15 gelangt. Diese Durchmischung wird noch dadurch gefördert, dass die "Abflussenden" der Tröge 1 jeder Lage 16, 17 alternierend ineinander diametral entgegengesetzte Richtungen weisen, wie dies in Fig. 4 gezeigt ist, da dadurch im "See" Strömungen erzeugt werden und auch da eine gewisse Vermischung stattfinden kann.

Solche Tröge können auch in geeigneter Weise bei anderen Verteilvorrichtungen eingesetzt werden.

## Patentansprüche

1. Anordnung zum Sammeln und Mischen von Flüssigkeit (15) über einem Verteilerboden (11) zwischen zwei Austauschabschnitten (12a, 12b) einer Gegenstrom-Füllkörperkolonne (10), welche Anordnung mindestens zwei sich über den Verteilerboden erstreckende, kanalartige Tröge (1) aufweist, wobei der Boden jedes Troges in einem ersten Teilbereich (3) geschlossen und in einem zweiten Teilbereich (4) mit mindestens einem Bodenauslass (5, 6) versehen ist.

2. Anordnung nach Anspruch 1, dadurch gekennzeichnet, dass der Bodenauslass (5) eines Troges (1) an seinem einen Ende angeordnet ist.

3. Anordnung nach Anspruch 1, dadurch gekennzeichnet, dass der Bodenauslass aus einer Anzahl öffnungen (6) besteht, die höchstens auf 1/2, vorteilhaft nur auf 1/4, seiner Länge verteilt sind.

4. Anordnung nach Anspruch 3, dadurch gekennzeichnet, dass die Oeffnungen unterschiedlich gross sind und in ihrer Grösse und/oder Anzahl gegen das Ende des Troges (1) zunehmen.

5. Anordnung nach Anspruch 3, dadurch gekennzeichnet, dass die öffnungen (6) in der Mitte eines Troges (1) konzentriert sind.

6. Anordnung nach einem der Ansprüche 1 bis 4, dadurch gekennzeichnet, dass bei auf gleicher Niveauhöhe angeordneten Trögen (1) mit einem Bodenauslass (5) an einem Ende die Bodenauslässe (5) mehrerer Tröge (1) abwechselnd in einander diametral entgegengesetzte Richtungen weisen.

7. Anordnung nach Anspruch 5, dadurch gekennzeichnet, dass auf einer Niveauhöhe alternierend Tröge (1) mit Bodenauslässen (5, 6) am Ende und in der Mitte angeordnet sind.

8. Anordnung nach einem der Ansprüche 1 bis 7, dadurch gekennzeichnet, dass mindestens zwei Lagen (16, 17) mit ihren Längsachsen in einem Winkel zueinander stehender Tröge (1) auf unterschiedlichen Niveauhöhen vorgesehen sind.

## Claims

1. An arrangement for collecting and mixing liquid (15) over a distributing tray (11) between two exchange portions (12a, 12b) of a counter-current packed column (10), the arrangement comprising at least two duct-like troughs (1) extending over the distributing tray, the base of each trough having a first part (3) which is closed and a second part (4) formed with at least one outlet (5, 6).

2. An arrangement according to claim 1, characterised in that the outlet (5) of a trough (1) is disposed at one end thereof.

3. An arrangement according to claim 1, characterised in that the outlet (4) comprises a number of openings (6) distributed over not more than a half and advantageously only a quarter of its length.

4. An arrangement according to claim 3, characterised in that the openings are of varying size and increase in size and/or number towards the end of the trough (1).

5. An arrangement according to claim 3, characterised in that openings (6) are concentrated in the middle of a trough (1).

6. An arrangement according to any of claims 1 to 4, characterised in that when troughs (1) are disposed at the same level and have an outlet (5) at one end of their base, the outlets (5) of a number of troughs (1) point alternately in diametrically opposite directions.

7. An arrangement according to claim 5, characterised in that troughs (1) alternating on the same level have outlets (5, 6) at the end and in the middle of their bases.

8. An arrangement according to any of claims 1 to 7, characterised in that at least two layers (16, 17) of troughs (1) are provided at different levels with their longitudinal axes at an angle to one another.

## Revendications

1. Dispositif pour recueillir et mélanger un liquide (15) au-dessus d'un fond de répartition (11) entre deux parties d'échange (12a, 12b) d'une colonne à contre-courant (10) à corps de remplissage, ledit dispositif comportant au moins deux bacs (1) en forme de canaux qui s'étendent au-dessus du fond de répartition, le fond de chaque bac étant fermé dans une première zone partielle (3) et pourvu, dans une seconde zone partielle (4), d'au moins une sortie de fond (5, 6).

2. Dispositif selon la revendication 1, caractérisé en ce que la sortie de fond (5) d'un bac (1) est placée à l'une de ses extrémités.

3. Dispositif selon la revendication 1, caractérisé en ce que la sortie de fond est constituée d'une pluralité d'ouvertures (6) qui sont réparties au plus sur la moitié, avantageusement sur seulement un quart de sa longueur.

4. Dispositif selon la revendication 3, caractérisé en ce que les ouvertures sont de différentes tailles, et leur dimension et/ou nombre augmente à mesure que l'on s'approche de l'extrémité du bac (1).

5. Dispositif selon la revendication 3, caractérisé en ce que les ouvertures (6) sont concentrées au centre d'un bac (1).

6. Dispositif selon l'une des revendications 1 à 4, caractérisé en ce que, si des bacs (1) pourvus d'une sortie de fond (5) à l'une de leurs extrémités sont disposés au même niveau, les sorties de fond (5) de plusieurs bacs (1) sont orientées en alternance dans des directions diamétralement opposées.

7. Dispositif selon la revendication 5, caractérisé en ce que sur un même niveau sont disposés, en alternance, des bacs (1) dont les sorties de fond (5, 6) sont situées à une extrémités et au centre.

8. Dispositif selon l'une des revendications 1 à 7, caractérisé en ce qu'il est prévu, sur des niveaux différents, au moins deux couches (16, 17) de bacs (1) dont les axes longitudinaux s'étendent selon un angle l'un par rapport à l'autre.
